# EUROPEAN PATENT SPECIFICATION

(11) **EP 3 936 377 B1**
(45) Date of publication and mention of the grant of the patent: **03.08.2022**
(21) Application number: 21180132.9
(22) Date of filing: 17.06.2021
(51) Int. Cl.: B60N 2/28

(54) **IMPROVED TOP-TETHER ANCHORING FOR SAFETY CAR SEATS FOR THE TRANSPORT OF CHILDREN IN A MOTOR VEHICLE**
VERBESSERTE TOP-TETHER-VERANKERUNG FÜR SICHERHEITSKINDERSITZE FÜR DEN TRANSPORT VON KINDERN IN EINEM KRAFTFAHRZEUG
ANCRAGE DE FIXATION SUPÉRIEURE AMÉLIORÉ DE SIÈGES DE SÉCURITÉ DE VOITURE POUR LE TRANSPORT D'ENFANTS DANS UN VÉHICULE À MOTEUR

(30) Priority: 07.07.2020 IT 202000016381
(43) Date of publication of application: 12.01.2022
(73) Proprietor: Artsana S.p.A., 22070 Grandate (CO) (IT)
(72) Inventor: MERLI, Gianluca, 22070 Grandate CO (IT); MARCHESINI, Luca, 22070 Grandate CO (IT)
(74) Representative: Perani & Partners S.p.A.

(56) References cited:
- US-A1- 2014 265 472
- US-A1- 2019 184 863

## Description

The present invention relates to an improvement of the ways of anchoring by top-tether a child safety car seat to a motor vehicle, intended to increase the safety of the anchoring to the motor vehicle.

The seat to which the present invention refers is of the type configured, preferably, but not exclusively, to be positioned on the rear seat of the motor vehicle with the face of the child facing the front of the motor vehicle and is of the type comprising a base provided with means, known as ISOFIX, for anchoring the same to the rear seat of the motor vehicle and a shell, provided with a sitting part and a backrest, positioned on the base in an angularly reclining manner with respect thereto, said shell being connectable, by means of an anchorage known as "top tether", to a fixed point of the motor vehicle.

Safety car seats for children fitted with motor vehicle connection devices such as those indicated above are known and are also comfortable for the child as a result of the fact that the shell related to the sitting part can be tilted with respect to the base, allowing the child to also be able to sleep.

However, the tilting of the shell causes a variation in the conditions of the top-tether coupling to the fixed point of the vehicle compared to that originally had by the seat when the shell was in a different angular position with respect to the base, for example with the backrest in an upright position, causing a loosening of the tensioning device. This implies having to manually intervene on the top-tether device in order to adjust the tension thereof with respect to the fixed point of the motor vehicle, to the new conditions of the car seat.

In the absence of such an adaptation, the stability and therefore the safety of the car seat is clearly compromised.

An example of a document addressing this problem is US 20190184863. Therein, one end of the top tether is secured to a fixed pin of the base. Furthermore, the top tether slidably engages a return element mounted in the backrest. By reclining the backrest, the mutual position of the fixed pin and the return element changes, in a manner which should limit the loosening of the top tether.

However, it is clear that the length of the section between the fixed pin and the return element changes with the tilt of the shell. Thus, it is seen in the figures that an effect of preventing the loosening of the top tether can only be obtained with a similar variation in the opposite direction of the section between the return element and the top of the seat of the vehicle on which the car seat is resting. However, the height of such a seat is obviously beyond the control of the person who designs the car seat, so the aforementioned beneficial effect is only achieved on certain vehicles.

The object of the present invention is to conform the top-tether connection of a safety car seat for children so that, in case of modification of the tilted positioning conferred to the sitting part-backrest shell of the car seat, such a modification automatically causes an adjustment of the tension of the anchoring of the top-tether connection to the fixed point of the motor vehicle without having to manually intervene to carry out such an adaptation.

This and other objects which will become more apparent from the following description are achieved by the anchoring of the present invention in accordance with claim 1 below.

The invention will now be described further with reference to an embodiment thereof, given by way of non-limiting example in the accompanying drawings in which:
- Figure 1 shows a schematic side view, in partial section, of the car seat according to the invention with the shell, consisting of the backrest and the sitting part, positioned in a substantially upright position with respect to the base of the car seat itself;
- Figure 2 shows a schematic side view, in partial section, as in the previous figure, in which the shell of the backrest and the sitting part has assumed a tilted position with respect to the car seat base.

With reference to the aforementioned figures, the base 1 of the car seat, indicated as a whole with 2, comprises the conventional ISOFIX fixing devices indicated as a whole with 3.

On the base 1 a conventional car seat shell 4 is placed, in turn provided with a sitting part 5 and a backrest 6 having also associated a conventional headrest 7 for the protection of the child's head.

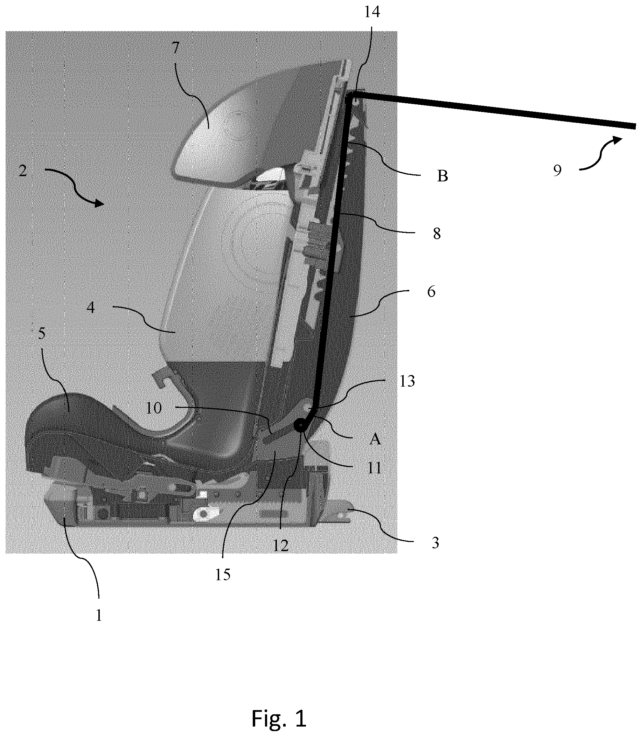

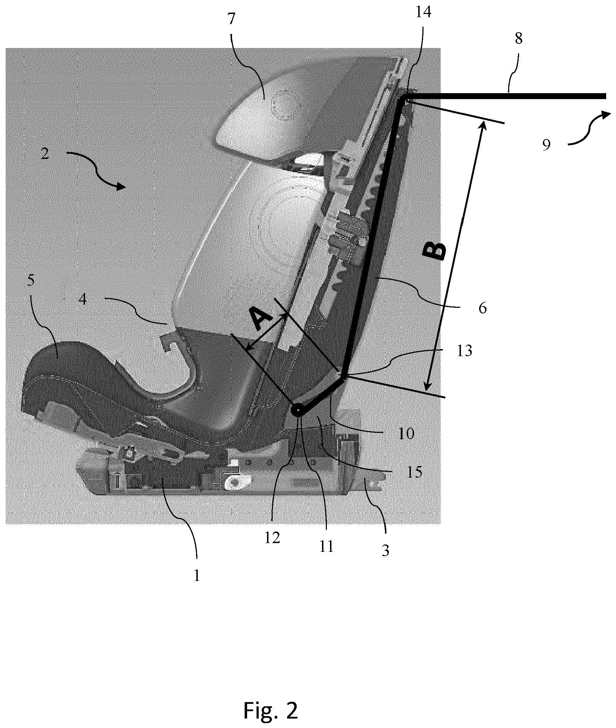

Conventionally, the shell 4 is adapted to assume various tilted positions with respect to the base 1 of the car seat to allow greater comfort for the child, including the possibility of sleeping while slightly laying down. A first position in which the backrest 6 of the shell is substantially erect is schematically shown in figure 1 while a different position, with the backrest 6 further tilted, adapted to allow the child to sleep, is shown in figure 2.

In the preferred embodiment, for the purpose of reclining, the base 1 comprises a guide 10, and the shell 4 comprises a pin sliding along the guide 10. For example, the guide 10 can be a slot shaped to slidably receive the pin. Preferably, two slots are provided at the two ends of the pin, and the slots are formed in support shelves 15 in a rear portion of the base 1, proximal to the backrest 6.

In addition to the guides 10 formed in the shelves 15, further guides, not shown, are preferably provided at a front part of the base 1, distal from the backrest 6. Correspondingly, the shell 4 comprises a further pin, not shown, sliding in such a further guide.

Furthermore, the seat 2 comprises a locking mechanism, not shown, configured to lock and unlock the sliding of any of the commented pins, for example the further pin placed in front, along the respective guide. This fixes the shell 4 in the desired recline with respect to the base 1.

In accordance with the invention, the top-tether anchoring comprises a flexible element 8, such as a belt, of which one end 9 (called the second end) is fixable to a fixed point of the motor vehicle, not shown, while the other end 11 (i.e., the first end), is fixed to a coupling point 12 of the car seat 2.

The coupling point 12 can be positioned on the seat 5 of the shell 4, or at a lower portion of the backrest 6 of the shell 4. In any case, therefore, the coupling point 12 is located in a lower portion of the shell 4, proximal to the base 1, and is movable with respect to the base 1 together with the shell 4.

In the illustrated embodiment, the coupling point 12 is identified by the pin for reclining the shell 4 with respect to the base 1, and is therefore slidable along the guide 10.

The flexible body 8 of the top-tether anchoring, in the section between the first and the second end 11, 9, is engaged with the base 1 and with the shell 4 between a first return element 13 and a second return element 14.

The first return element 13 is positioned on the base 1 of the car seat 2, and is therefore fixed with respect to the motor vehicle during the reclining of the shell 4. Preferably, the first return element 13 is located in a rear portion of the base 1, proximal to the backrest 6, for example mounted on the support shelves 15 in which the guides 10 are also formed.

The second return element 14 is positioned on the backrest 6 at an upper portion of the shell 4, distal from the base 1. The second return element 14, in the same manner as the coupling point 12, is movable with respect to the base 1 with the reclining of the shell 4.

Preferably, said first and second return elements, 13 and 14, consist of bodies in the form of cylindrical rods that are sustained by supports at the axial ends thereof. Optionally, the rods are rotatable on the relative supports about the longitudinal axis thereof.

The supports of the first return element 13 are integral with the base 1, while the supports of the second return element 14 are integral with the shell 4.

The behaviour modes of the safety car seat according to the invention can be learned with particular reference to figure 2 in which B indicates the length of a second section of the flexible element 8 of the top-tether anchoring between the first return element 13 and the second return element 14, while A indicates the length of a first section of the same flexible element between the first return element 13 and the coupling point 12 of the car seat to which the end 11 of the flexible element 8 is fixed.

As can be seen in figure 2, the first section A and the second section B have variable length as a result of the reclining of the shell 4 with respect to the base 1. In fact, by virtue of the arrangement of the coupling point 12, the first and the second return element 13, 14, in case of a reclining movement which increases the tilt of the shell 4 on the base 1, there is a decrease in length B which causes a loosening of the conventional tensioning device (not shown) present in the top-tether anchoring. Simultaneously with such an elongation, the tilt of the shell 4 causes an elongation of the length of the flexible element 8 in the section A between the first return element 13 and the fixing point 12 to the base 1.

Such an elongation compensates for the shortening and therefore automatically causes a substantial balance in the tensioning device of the top-tether anchoring of the car seat when the tilt of the shell 4 varies, entirely promoting the stability and therefore safety of the child transported in the car seat 2.

The opposite occurs during a lifting movement which involves a decrease in the tilt of the shell 4, returning the backrest 6 to a substantially vertical orientation.

This automatic adjustment, inside the car seat 2, is independent of the height of the seat on which the car seat 2 is placed. The preferred arrangement bringing the advantages described above includes that the coupling point 12 is positioned ahead with respect to the first return element 13. In other words, the coupling point 12, as well as the guide 10 in which it slides, are located between the first return element 13 and a front portion of the sitting part 5, distal from the backrest 6. This preferably occurs for all the different tilts of the shell 4.

The flexible element 8 then slidably contacts the first return element 13 passing behind it, so as to curve between the first section A pointing to the coupling point 12 and the second section B pointing to the second return element 14. Furthermore, the flexible element 8 slidably contacts the second return element 14 passing ahead of it to curve between the second section B and the outside of the car seat 2.

## Claims

1. A child car seat (2), to be positioned on a seat of a motor vehicle, comprising a base (1) provided with an ISOFIX coupling system (3), for anchoring the same to the seat of the motor vehicle, and a shell (4) positioned on the base (1) in an angularly reclinable manner with respect thereto, the shell (4) extending between a lower portion, proximal to the base (1), and an upper portion, distal from the base (1), and being provided with a sitting part (5) at the lower portion and a backrest (6) extending between the lower portion and the upper portion, said shell (4) being connectable to a fixed point of the vehicle by means of a top tether anchorage, comprising a flexible element (8) extending longitudinally between a first end (11) and a second end (9), said second end (9) being connectable to said fixed point of the vehicle, **characterized in that** said first end (11) of said flexible element (8) is fixed to a coupling point (12) positioned on said lower portion of the shell (4) and said flexible element (8) engages with said base (1), passing around a first return element (13) positioned on said base (1) of the child car seat (2), and engages with said shell (4) passing around a second return element (14) positioned on the backrest (6) at the upper portion of said shell (4).

2. Child car seat according to claim 1, **characterized in that** the base (1) comprises a guide (10) along which said coupling point (12) of the shell (4) is slidable to recline the shell (4) with respect to the base (1) on which it is positioned.

3. Child car seat according to claim 2, **characterized in that** the coupling point (12) for the first end (11) of the flexible element (8) is identified by a pin, while the guide (10) comprises a slot shaped to slidably receive the pin.

4. Child car seat according to any one of claims 1 to 3, **characterized in that** a first section (A) of the flexible element (8) is located between the first return element (13) and the coupling point (12), and a second section (B) of the flexible element (8) is located between the first and second return elements (13, 14), the first section (A) and the second section (B) having variable length as a result of reclining the shell (4) with respect to the base (1).

5. Child car seat according to claim 4, **characterized in that** the coupling point (12), the first and second return elements (13, 14) are arranged so that a reclining movement of the shell (4) which shortens the second section (B) causes an elongation of the first section (A), and an opposite lifting movement of the shell (4) which elongates the second section (B) causes a shortening of the first section (A).

6. Child car seat according to claim 5, **characterized in that** said elongations and shortenings of the first and second sections (A, B) are such that the tension of the flexible element (8) remains substantially constant during said reclining and lifting movements, when the second end (9) of the flexible element (8) is connected to said fixed point of the vehicle.

7. Child car seat according to any one of claims 1 to 6, **characterized in that** the coupling point (12) is positioned ahead of the first return element (13).

8. Child car seat according to any one of claims 1 to 7, **characterized in that** the flexible element (8) passes along the rear of the first return element (13) and the front of the second return element (14).

9. Child car seat according to any one of claims 1 to 8, **characterized in that** said first and second return elements (13, 14) consist in bodies in the form of cylindrical rods supported, at the axial ends thereof, by supports integral respectively with said base (1) and said shell (4).

## Patentansprüche

1. Kinderautositz (2), der auf dem Sitz eines Kraftfahrzeugs zu positionieren ist, umfassend, eine Basis (1), die mit einem ISOFIX-Kupplungssystem (3) zur Verankerung desselben auf dem Sitz des Kraftfahrzeugs versehen ist, und einer auf der Basis (1) im Verhältnis zu dieser in winkelverstellbaren Weise positionierten Sitzschale (4), wobei sich die Sitzschale (4) zwischen einem unteren Abschnitt, proximal zur Basis (1) und einem oberen Teil, distal von der Basis (1), streckt und mit einem Sitzteil (5) am unteren Teil und einer sich zwischen dem unteren Teil und dem oberen Teil der sich streckenden Rücklehne (6) versehen ist, wobei die Sitzschale (4) mit einem festen Punkt des Fahrzeugs durch eine obere Haltevorrichtung verbindbar ist, ein flexibles Element (8) aufweist, das sich in Längsrichtung zwischen einem ersten Ende (11) und einem zweiten Ende (9) streckt, wobei das zweite Ende (9) mit dem festen Punkt des Fahrzeugs verbindbar ist, **dadurch gekennzeichnet, dass** das erste Ende (11) des flexiblen Elements (8) an einem Kopplungspunkt (12) befestigt ist, der auf dem unteren Teil der Sitzschale (4) angeordnet ist, und das flexible Element (8) mit der Basis (1) in Eingriff steht, um ein erstes, auf der Basis (1) des Kinderautositzes (2) positioniertes Rückstellelement (13) herumführt und mit der Sitzschale (4) um ein zweites, auf der Rücklehne (6) im oberen Teil der Sitzschale (4) positioniertes Rückstellelement (14) herumführt.

2. Kinderautositz nach Anspruch 1, **dadurch gekennzeichnet, dass** die Basis (1) eine Führung (10) bereitstellt, entlang der der Kopplungspunkt (12) der Sitzschale (4) verschiebbar ist, um die Sitzschale (4) im Verhältnis zur Basis (1), auf der sie positioniert ist, zu neigen.

3. Kinderautositz nach Anspruch 2, **dadurch gekennzeichnet, dass** der Kopplungspunkt (12) für das erste Ende (11) des flexiblen Elements (8) durch einen Stift gekennzeichnet ist, während die Führung (10) einen Schlitz bereitstellt, der so geformt ist, dass er den Stift gleitend aufnehmen kann.

4. Kinderautositz nach einem der Ansprüche 1 bis 3, **dadurch gekennzeichnet, dass** ein erster Abschnitt (A) des flexiblen Elements (8) zwischen dem ersten Rückstellelement (13) und dem Kopplungspunkt (12) angeordnet ist und ein zweiter Abschnitt (B) des flexiblen Elements (8) zwischen dem ersten und dem zweiten Rückstellelement (13, 14) angeordnet ist, wobei der erste Abschnitt (A) und der zweite Abschnitt (B) aufgrund der Neigung der Sitzschale (4) im Verhältnis zur Basis (1) eine variable Länge aufweisen.

5. Kinderautositz nach Anspruch 4, **dadurch gekennzeichnet, dass** der Kopplungspunkt (12), das erste und das zweite Rückstellelement (13, 14) so angeordnet sind, dass eine Neigungsbewegung der Sitzschale (4), die den zweiten Abschnitt (B) verkürzt, eine Verlängerung des ersten Abschnitts (A) zur Folge hat, und dass eine entgegengesetzte Hubbewegung der Sitzschale (4), die den zweiten Abschnitt (B) verlängert, zu einer Verkürzung des ersten Abschnitts (A) führt.

6. Kinderautositz nach Anspruch 5, **dadurch gekennzeichnet, dass** die Verlängerungen und Verkürzungen des ersten und zweiten Abschnitts (A, B) derart beschaffen sind, dass die Spannung des flexiblen Elements (8) während der Liege- und Hebebewegungen im Wesentlichen konstant bleibt, wenn das zweite Ende (9) des flexiblen Elements (8) mit dem festen Punkt des Fahrzeugs verbunden ist.

7. Kinderautositz nach einem der Ansprüche 1 bis 6, **dadurch gekennzeichnet, dass** der Kopplungspunkt (12) vor dem ersten Rückstellelement (13) angeordnet ist.

8. Kinderautositz nach einem der Ansprüche 1 bis 7, **dadurch gekennzeichnet, dass** das flexible Element (8) an der Rückseite des ersten Rückstellelements (13) und an der Vorderseite des zweiten Rückstellelements (14) entlang verläuft.

9. Kinderautositz nach einem der Ansprüche 1 bis 8, **dadurch gekennzeichnet, dass** das erste und das zweite Rückstellelement (13, 14) aus Körpern in der Form von zylindrischen Stäben bestehen, die an ihren axialen Enden von Halterungen gestützt werden, die jeweils fest mit der Basis (1) und der Sitzschale (4) verbunden sind.

## Revendications

1. Siège auto pour enfant (2), destiné à être positionné sur un siège d'un véhicule à moteur, comprenant une base (1) pourvue d'un système d'accouplement ISOFIX (3), pour ancrer celle-ci au siège du véhicule à moteur, et une coque (4) positionnée sur la base (1) de manière angulairement inclinable par rapport à celle-ci, la coque (4) s'étendant entre une partie inférieure, proximale à la base (1), et une partie supérieure, distale de la base (1), et étant pourvue d'une partie d'assise (5) au niveau de la partie inférieure et un dossier (6) s'étendant entre la partie inférieure et la partie supérieure, ladite coque (4) pouvant être reliée à un point fixe du véhicule au moyen d'un ancrage pour fixation supérieure, comprenant un élément flexible (8) s'étendant longitudinalement entre une première extrémité (11) et une seconde extrémité (9), ladite seconde extrémité (9) pouvant être reliée audit point fixe du véhicule, **caractérisé en ce que** ladite première extrémité (11) dudit élément flexible (8) est fixée à un point d'accouplement (12) positionné sur ladite partie inférieure de la coque (4) et ledit élément flexible (8) vient en prise avec ladite base (1), passant autour d'un premier élément de rappel (13) positionné sur ladite base (1) du siège d'auto pour enfant (2), et vient en prise avec ladite coque (4) passant autour d'un second élément de rappel (14) positionné sur le dossier (6) au niveau de la partie supérieure de ladite coque (4).

2. Siège auto pour enfant selon la revendication 1, **caractérisé en ce que** la base (1) comprend un guide (10) le long duquel ledit point d'accouplement (12) de la coque (4) peut coulisser pour incliner la coque (4) par rapport à la base (1) sur laquelle elle est positionnée.

3. Siège auto pour enfant selon la revendication 2, **caractérisé en ce que** le point d'accouplement (12) pour la première extrémité (11) de l'élément flexible (8) est identifié par une broche, tandis que le guide (10) comprend une fente conformée pour recevoir la broche de manière coulissante.

4. Siège auto pour enfant selon l'une quelconque des revendications 1 à 3, **caractérisé en ce qu'**une première section (A) de l'élément flexible (8) est située entre le premier élément de rappel (13) et le point d'accouplement (12), et une seconde section (B) de l'élément flexible (8) est située entre les premier et second éléments de rappel (13, 14), la première section (A) et la seconde section (B) ayant une longueur variable résultant de l'inclinaison de la coque (4) par rapport à la base (1).

5. Siège auto pour enfant selon la revendication 4, **caractérisé en ce que** le point d'accouplement (12), les premier et second éléments de rappel (13, 14) sont agencés de sorte qu'un mouvement d'inclinaison de la coque (4) qui raccourcit la seconde section (B) provoque un allongement de la première section (A), et un mouvement de levage opposé de la coque (4) qui allonge la seconde section (B) provoque un raccourcissement de la première section (A).

6. Siège auto pour enfant selon la revendication 5, **caractérisé en ce que** lesdits allongements et raccourcissements des première et seconde sections (A, B) sont tels que la tension de l'élément flexible (8) reste sensiblement constante pendant lesdits mouvements d'inclinaison et de levage, lorsque la seconde extrémité (9) de l'élément flexible (8) est reliée audit point fixe du véhicule.

7. Siège auto pour enfant selon l'une quelconque des revendications 1 à 6, **caractérisé en ce que** le point d'accouplement (12) est positionné devant le premier élément de rappel (13).

8. Siège auto pour enfant selon l'une quelconque des revendications 1 à 7, **caractérisé en ce que** l'élément flexible (8) passe le long de l'arrière du premier élément de rappel (13) et de l'avant du second élément de rappel (14).

9. Siège auto pour enfant selon l'une quelconque des revendications 1 à 8, **caractérisé en ce que** lesdits premier et second éléments de rappel (13, 14) sont constitués par des corps en forme de tiges cylindriques supportées, à leurs extrémités axiales, par des supports solidaires, respectivement, de ladite base (1) et de ladite coque (4).
